(19) Europäisches Patentamt
European Patent Office
Office européen des brevets

(11) EP 2 849 040 B1

(12) FASCICULE DE BREVET EUROPEEN

(45) Date de publication et mention
de la délivrance du brevet:
**25.02.2026 Bulletin 2026/09**

(51) Classification Internationale des Brevets (IPC):
**G06F 3/041** (2006.01) **G06F 3/044** (2006.01)

(52) Classification Coopérative des Brevets (CPC):
**G06F 3/0418; G06F 3/041661; G06F 3/0443;**
G06F 2203/04101; G06F 2203/04104;
G06F 2203/04105; G06F 2203/04107;
G06F 2203/04808

(21) Numéro de dépôt: **14179174.9**

(22) Date de dépôt: **06.08.2010**

(54) **Dispositif et procédé d'interface de commande sensible à un mouvement d'un corps ou d'un objet et écran de visualisation intégrant ce dispositif**

Vorrichtung und Verfahren einer Steuerschnittstelle, die empfindlich auf eine Bewegung eines Körpers oder eines Objekts reagiert, und mit dieser Vorrichtung ausgestatteter Anzeigebildschirm

Device and method for a control interface that is sensitive to a movement of a body or an object and display screen including said device

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **07.08.2009 FR 0955583**

(43) Date de publication de la demande:
**18.03.2015 Bulletin 2015/12**

(62) Numéro(s) de document de la (des) demande(s) initiale(s) en application de l'article 76 CBE:
**10762731.7 / 2 462 498**

(73) Titulaire: **QuickStep Technologies LLC**
**Wilmington, DE 19801 (US)**

(72) Inventeur: **Roziere, Didier**
**30900 Nîmes (FR)**

(74) Mandataire: **Lang, Johannes et al**
**Bardehle Pagenberg Partnerschaft mbB**
**Patentanwälte, Rechtsanwälte**
**Prinzregentenplatz 7**
**81675 München (DE)**

(56) Documents cités:
**WO-A2-2008/062217      US-A1- 2006 097 991**
**US-A1- 2009 009 485**

## Description

### Domaine technique

La présente invention concerne un dispositif d'interface de commande, notamment gestuelle et/ou tactile possiblement combinée à une commande vocale, sensible à un mouvement d'un corps ou d'un objet ou de la voix. Elle vise également un procédé d'interface de commande mis en œuvre dans ce dispositif, ainsi qu'un équipement de commande mettant en œuvre un tel dispositif.

Le domaine de l'invention est plus particulièrement, mais de manière non limitative, celui des interfaces homme-machine, gestuelles et/ou tactiles, et possiblement vocale permettant en temps réel d'interpréter des mouvements du corps, de la main, du doigt ou d'un objet, à grande distance jusqu'au toucher, ces mouvements étant combinés ou non à une requête vocale afin d'exécuter une ou des commandes.

### Etat de la technique antérieure

Les interfaces hommes-machines dites virtuelles, c'est à dire gestuelles et/ou tactiles et vocale, par opposition aux interfaces ou l'utilisateur agit sur des capteurs mécaniques tels que des touches de clavier ou des commutateurs, sont le plus souvent des cameras 3D lorsqu'il s'agit d'interface gestuelle et des surfaces actives, souvent transparentes et intégrées sur des écrans d'affichage lorsqu'il s'agit d'interface tactile. Ces interfaces tactiles sont largement répandues sous le nom de « touchpad » pour de multiples applications industrielles et grand public, comme par exemple sur les smartphones, en domotique ou les interfaces de jeux.

L'écran permet d'afficher par exemple un clavier ou l'interface d'un logiciel dont l'image évolue en réponse aux actions de l'utilisateur, qui consistent en général en un déplacement, un tapotement ou encore un contact prolongé du doigt ou d'un stylet sur la surface de l'écran afin d'exécuter des commandes. Plus récemment se sont développées les interfaces dites gestuelles pour répondre à la complexité de plus en plus grande des produits numériques issus de la convergence des technologies de l'information de la communication et du divertissement. Ces interfaces sont le plus souvent à base d'une camera 3D et d'un traitement d'image capable d'interpréter à grande distance, jusqu'à 5 mètres, les mouvements du corps ou de la main pour interagir avec l'écran.

Parmi les commandes virtuelles il faut aussi citer la commande vocale qui permet l'exécution d'une requête à partir de la voix.

Parmi les technologies tactiles existantes, les technologies capacitives sont fréquemment utilisées car :

-   elles ne nécessitent pas d'exercer une action mécanique sur la surface de l'écran contrairement à des techniques résistives par exemples,

-   elles se prêtent bien au maillage de la surface de l'écran par un réseau de capteurs directement intégré à la surface de ce dernier, ce qui permet une intégration bien plus compacte et robuste qu'avec des techniques optiques par exemple qui nécessitent un réseau d'émetteurs-récepteurs surélevés par rapport à la surface de détection.

De plus en plus, on recherche dans les interfaces virtuelles une fonction de détection de proximité, qui permet de créer de nouveaux modes d'interaction homme-machine sans aucun contact. Les capteurs doivent alors être en mesure de détecter des déplacements ou des formes à plusieurs centimètres, de manière suffisamment précise et résolue pour pouvoir les transformer en commandes.

Si les technologies optiques sont incontournables quand il s'agit de détecter précisément les mouvements à très grande distance (au delà de 40 centimètres), les technologies capacitives s'avèrent très bien adaptées pour les interfaces sans contact de proximité, notamment parce que l'ensemble des capteurs peut être intégré à une surface active non plane, par exemple un écran, sans zone morte ou sans nécessiter de dispositifs externes (caméras).

Parmi les interfaces tactiles capacitives, les techniques les plus utilisées sont en général basées sur le principe du transfert de charges. Elles permettent d'obtenir une sensibilité de l'ordre du picofarad mais ne sont pas adaptées pour réaliser une interface gestuelle. En effet, leur sensibilité ne permet pas de détecter l'approche d'un doigt car la capacité générée ne dépasse alors pas quelques centièmes de picofarads. Les capacités parasites présentes dans ce type de capteur et dans l'électronique empêchent toute amélioration de la sensibilité.

De plus, ces techniques sont très sensibles aux perturbations électromagnétiques, aux charges électriques parasites et à la conduction électrique du diélectrique recouvrant les électrodes. Lorsque l'humidité relative de l'air est supérieure à 60%, la plupart des diélectriques deviennent légèrement conducteurs d'électricité et les charges générées par l'électronique sont modifiées, ce qui perturbe la mesure capacitive.

Parmi les solutions techniques employées pour réaliser des interfaces non tactiles capacitives, on en connait qui mettent en œuvre une pseudogarde permettant de réduire fortement les capacités parasites dans le capteur et l'électronique. Ces techniques permettent toutefois de ne gagner au mieux qu'un ordre de grandeur sur la sensibilité, ce qui permet de détecter la présence d'un doigt à seulement quelques mm de la surface sensible du capteur.

En ce qui concerne les interfaces gestuelles capacitives, On connait le document US 6,847,354 par Vranish, dans lequel des capteurs capacitifs avec garde active sont mis en œuvre. Cette garde active est créée à l'aide d'un amplificateur de gain unitaire qui génère dans la garde une tension d'une amplitude identique à celle de l'électrode de mesure.

L'inconvénient de cette méthode est que l'électronique génère par principe physique des capacités parasites qui correspondent à la somme des capacités d'entrée de l'amplificateur pour générer la garde active, appelée aussi pseudo garde, et du circuit pour exciter l'électrode de mesure. Ces capacités parasites atteignent facilement le picofarad et se rajoutent à la capacité à mesurer, qui peut ne représenter que le centième de cette valeur totale.

De plus, la mesure de la capacité n'est pas directe car l'électronique de Vranish obtient l'image de la capacité à mesurer en mesurant son courant via une résistance de référence. Cette résistance génère un déphasage parasite du courant électrique qui dégrade fortement la qualité de détection ou de démodulation du signal représentant la capacité à mesurer. Un autre inconvénient est le niveau de diaphonie entre les différentes électrodes. En effet, chaque électrode est excitée par un amplificateur opérationnel dont le gain est approximativement unitaire. Le moindre écart de gain entre les différents amplificateurs provoque une importante capacité parasite supplémentaire.

Ces inconvénients ne permettent pas de détecter et de repérer la position d'un objet comme un doigt ou une main à plusieurs centimètres voire dizaines de centimètres avec chaque capteur.

Par ailleurs, les technologies capacitives mises en œuvre pour la réalisation d'interfaces gestuelles ont été développées le plus souvent dans le but d'être intégrées à des écrans ou du moins des surfaces sensiblement planes. Les structures de capteurs sont matricielles, comme dans US 6,847,354, et interfacées par des structures d'électrodes disposées selon une grille X-Y. Ces technologies se prêtent difficilement à l'instrumentation de surfaces de formes plus complexes.

En particulier, elles sont difficilement applicables à des dispositifs de commandes virtuelles ou des interfaces gestuelles basés non pas sur une surface plane instrumentée mais sur d'autres types de géométries incluant des cavités, des reliefs, des ondulations simulant par exemple des touches, des boutons ou enveloppant l'utilisateur dans lesquels des capteurs peuvent être disposés selon des géométries diverses, parfois sous des matériaux diélectriques d'épaisseur importante, et doivent parfois pouvoir être disposés et gérés indépendamment les uns des autres.

On connaît le document FR 2,884,349 par Rozière, qui divulgue un système basé sur des capteurs capacitifs comportant une seule électrode de mesure. Le dispositif permet de détecter des objets au delà de 10 cm avec chaque électrode, grâce à une électronique à pont flottant. Les mesures des électrodes sont lues séquentiellement au moyen d'un système de scrutation.

Toutefois, ce dispositif, destiné à équiper des parois d'instruments mobiles, est spécifiquement conçu pour couvrir les applications d'anticollision, et ne couvre pas les applications d'interface gestuelle.

Si les interfaces gestuelles sont amenées à prendre une grande importance, le toucher demeure toutefois très important, même dans les interfaces virtuelles capables de détecter les mouvements à distance, pour des raisons notamment psychologiques et de sécurité. En effet, d'une part la sensation tactile contribue au confort de l'utilisateur, d'autre part le toucher permet une validation des ordres efficace dans des contextes d'utilisation où la sécurité est importante (équipements médicaux, véhicules).

Le but de la présente invention est de proposer une interface gestuelle et une interface gestuelle et tactile, composées d'un dispositif et un procédé pour le contrôle d'actions et la saisie de commandes, qui soit compact et intégrable dans une grande variété d'environnements, tout en permettant:

- d'anticiper des actions par des mesures précises de déplacements sans contact, et
- de valider de manière sécurisée des ordres par détection d'actions physiques sur une surface.

US 2006/097991 A1 divulgue un écran tactile multipoint.

US 2009/009485 A1 divulgue une garde commandée pour des pavés tactiles capacitifs.

## Exposé de l'invention

L'objectif précité est atteint par l'invention définie dans les revendications indépendantes; des modifications de l'invention sont définies dans les revendications dépendantes.

Cet objectif est atteint avec un dispositif d'interface de commande sensible à un mouvement d'un corps ou d'un objet, comprenant:

- une surface de détection,
- au moins un capteur capacitif, lequel ou lesquels capteur(s) comprenant chacun une électrode de mesure comportant une surface active orientée vers la surface de détection, ou sensiblement confondue avec ladite surface de détection,
- des moyens électroniques d'excitation et de traitement pour exciter les électrodes de mesure à un potentiel électrique alternatif et traiter les signaux issus desdites électrodes de mesure, de façon à mesurer la capacité entre lesdites électrodes de mesure et un objet et fournir une information de distance entre la surface active desdites électrodes de mesure et ledit un objet, dans lequel :
- les électrodes de mesure sont réalisées au moyen de matériaux conducteurs sensiblement transparents, et
- le dispositif d'interface de commande est sensiblement transparent,

et caractérisé par :

- une garde en matériau conducteur à l'électricité disposée à proximité des électrodes de mesure au moins selon leur face sensiblement opposée à la surface active, laquelle garde étant excitée à un potentiel électrique alternatif sensiblement identique à celui des électrodes de mesure, et
- dans laquelle la garde est réalisée au moyen de matériaux conducteurs sensiblement transparents.

Suivant l'invention,

- les surfaces actives des électrodes de mesure sont indépendantes les unes des autres, et
- les moyens électroniques d'excitation et de traitement sont en outre agencés pour interroger lesdites électrodes de mesure indépendamment les unes des autres.

Avantageusement, les moyens électroniques d'excitation et de traitement peuvent présenter une étendue de mesure permettant à la fois:

- de détecter et identifier un mouvement relatif du corps ou de l'objet par rapport à la surface active des électrodes de mesure, et
- de détecter un contact dudit corps ou dudit objet avec la surface de détection.

L'espace de détection est défini comme la portion de l'espace dans laquelle les capteurs capacitifs sont aptes à détecter un objet et en mesurer la distance.

Les objets détectables avec un dispositif selon l'invention sont des objets détectables de manière capacitive, c'est-à-dire sensiblement conducteurs d'électricité et aptes à constituer une masse électrique. Ces objets ne sont pas nécessairement reliés à la masse par une connexion électrique, mais ils peuvent l'être naturellement par couplage capacitif. On peut citer, à titre d'exemples non limitatifs, un être vivant, une main, un doigt, ou un stylet en matériau conducteur tenu à la main.

Le dispositif selon l'invention permet de mesurer à chaque instant la forme de la surface du corps ou de l'objet relativement à la position des capteurs capacitifs. La détection du mouvement d'un objet ou d'un corps peut ainsi inclure, de manière non limitative, sa position dans l'espace, sa trajectoire, et l'analyse de sa forme à des fins d'identification par exemple.

Avantageusement, les moyens électroniques d'excitation et de traitement peuvent au moins pour partie être référencés au potentiel électrique de la garde.

Cette configuration de l'électronique, en pont flottant, permet de supprimer les capacités parasites. Ainsi, les capacités mesurées par chaque capteur sont directement celles créées entre l'objet visé et les électrodes. La sensibilité du dispositif est optimisée et permet une mesure à grande distance très résolue. De plus, les capteurs capacitifs et l'électronique associée peuvent alors être optimisés pour atteindre une étendue de mesure, ou dynamique, importante. En effet, la gamme de capacités à mesurer avec chaque électrode peut s'étendre de moins d'un millième de picofarad à plusieurs picofarads, soit une dynamique en termes de capacités supérieure à 1000. Cette dynamique permet de détecter, avec sensiblement la même résolution latérale liée à la taille de l'électrode, la présence ou la position d'un objet lointain comme un doigt à plus de 5 cm de distance ainsi que le contact et la pression de ce doigt par exemple sur un diélectrique recouvrant l'électrode de mesure. De cette manière, le dispositif selon l'invention permet à la fois d'anticiper des actions par identification de l'objet qui approche ou de son mode d'approche, et de valider des commandes par détection du contact.

Suivant un autre aspect avantageux du dispositif selon l'invention, chaque capteur capacitif comprend une seule électrode de mesure qui est indépendante des électrodes des autres capteurs. Il est ainsi possible de disposer les électrodes selon des géométries et des formes de surfaces très variées. Ce caractère indépendant des électrodes est un aspect particulièrement avantageux du dispositif selon l'invention pour la réalisation d'interfaces gestuelles basées sur des structures de formes quelconques, et en ce sens, il diffère des interfaces gestuelles de l'art antérieur basées sur des structures matricielles de capteurs disposées sur des surfaces planes ou des écrans.

Suivant des modes de réalisation particuliers, les moyens électroniques d'excitation et de traitement peuvent comprendre des moyens de scrutation permettant de lire séquentiellement les signaux de mesure issus des capteurs capacitifs. Les électrodes qui ne sont pas en cours de scrutation peuvent avantageusement être reliées au potentiel de la garde.

Dans ce mode de réalisation, les électrodes sont sélectionnées séquentiellement afin de limiter le nombre de composants et la consommation d'énergie. Le fait de relier au potentiel de garde les électrodes qui ne sont pas en cours de scrutation permet de réduire au maximum les effets de bord électrostatique de l'électrode mesurante.

Suivant d'autres modes de réalisation nécessitant plus de composants, chaque électrode peut être reliée à un circuit électronique comme par exemple un amplificateur de charge. Ces circuits électroniques sont référencés au potentiel électrique flottant, donc à celui de la garde, ce qui permet de conserver la propriété avantageuse que chaque électrode est vue comme une garde pour ses voisines. Cette solution permet d'augmenter la vitesse de mesure car les capacités ou distances peuvent être mesurées en parallèle sur toutes les électrodes.

Il est bien entendu possible de mettre en œuvre d'autres modes de scrutation des électrodes, tel que par exemple une lecture par groupe.

Suivant des modes de réalisation particuliers, les moyens électroniques d'excitation et de traitement peuvent comprendre des moyens permettant de regrouper électriquement des électrodes de mesure, de telle sorte que lesdites électrodes regroupées constituent une électrode de mesure unique.

Il est ainsi possible de créer des électrodes de surface supérieure, permettant d'augmenter l'étendue de mesure pour détecter des objets à une plus grande distance. La configuration des groupements d'électrodes peut bien entendu être effectuée électroniquement, et être contrôlée par les moyens de calcul. Les électrodes de mesure peuvent par exemple être regroupées lorsque l'objet est loin du panneau afin de privilégier la portée de mesure, et dégroupées lorsque l'objet est proche des électrodes afin de favoriser la résolution spatiale et la précision de la position en trois dimensions de l'objet.

Avantageusement,

- la surface des électrodes peut être calculée de telle sorte que chaque capteur capacitif puisse mesurer la distance entre la surface active de l'électrode et un doigt jusqu'à une distance d'au moins 3 cm, ou, suivant les applications, 5 cm ;
- les électrodes de mesures peuvent être réalisées sur un support de type circuit imprimé souple. Ainsi, elles peuvent être réalisées selon des techniques de réalisation de circuits électroniques classiques, et être disposées selon des surfaces ou des ensembles de surfaces qui ne sont pas nécessairement plans,
- les électrodes de mesures peuvent également être réalisées sur un support de type circuit imprimé rigide,
- les moyens électroniques d'excitation et de traitement référencés au potentiel de la garde peuvent être fixés sur le même support que les électrodes.

Le fait qu'une partie de l'électronique soit référencée au potentiel de la garde permet avantageusement de la placer à proximité des électrodes sans risquer de perturber leur fonctionnement, et améliore ainsi les conditions d'intégration du dispositif. En effet, si ces circuits électriques étaient référencés par exemple au potentiel de masse extérieur (potentiel proche de celui de l'objet ou du doigt), les lignes de champ des électrodes seraient très rapidement absorbées par ces circuits et la portée du dispositif ne permettrait pas de réaliser une détection sans contact. C'est un problème majeur rencontré dans beaucoup de dispositifs de l'art antérieur.

Avantageusement, la partie de l'électronique référencée à la garde peut communiquer avec des systèmes extérieurs en utilisant la masse de référence de ces systèmes extérieurs. La liaison et le découplage entre l'électronique capacitive et l'extérieur peuvent par exemple être réalisés au moyen d'optocoupleurs ou de selfs (inductances) de choc. L'alimentation de la partie flottante référencée à la garde peut être réalisée avec un convertisseur DC-DC ou des selfs de choc.

Suivant un autre aspect de l'invention, le dispositif peut comprendre en outre un matériau diélectrique disposé du côté de la surface active des électrodes de mesure. Dans ce cas, la surface dudit matériau diélectrique opposée aux électrodes constitue la surface de détection.

Avantageusement,

- le matériau diélectrique peut être disposé de telle sorte à être sensiblement en contact avec la surface active des électrodes,
- le matériau diélectrique peut comprendre un matériau souple permettant à la surface de détection de se déformer sensiblement en direction des électrodes de mesure par amincissement local du matériau sous l'action d'une force d'appui.

Le fait d'utiliser un matériau souple permet avantageusement de détecter la pression exercée sur la surface par mesure du déplacement de l'objet en deçà de la position de la surface de détection au repos.

Suivant un autre mode de réalisation, le matériau diélectrique peut comprendre une plaque sensiblement rigide, apte à se déplacer vers des électrodes de mesure sous l'action d'une force d'appui, selon une inclinaison dépendant du point d'application de ladite force d'appui.

La plaque peut être pourvue d'électrodes détectables de manière capacitive sur au moins une partie de sa surface, de telle sorte à pouvoir en mesurer le déplacement ou la déformation au moyen d'électrodes capacitives judicieusement placées. Cette plaque peut être par exemple un clavier soumis à la pression d'un objet ou d'un doigt. Avec au moins deux électrodes capacitives disposées vis-à-vis d'électrodes de la plaque et mesurant la distance à ces électrodes, il est possible de mesurer l'inclinaison du clavier et d'estimer la zone approximative où le doigt appuie.

Suivant une autre configuration, un ensemble, par exemple un clavier, comprenant une plaque diélectrique recouvrant de premières électrodes de mesure, peut être apte à se déplacer globalement sous l'effet de la pression vers de secondes électrodes de mesures, qui mesurent cette pression.

Avantageusement, ces secondes électrodes peuvent être de sensibilité optimisée pour les faibles déplacements.

Avantageusement,

- le matériau diélectrique peut être sélectionné de telle sorte à présenter une texture agréable au toucher,
- la surface de détection peut présenter des formes en relief matérialisant des commandes.

La surface de détection peut être plane, mais aussi d'une forme quelconque permettant une intégration optimale en termes d'esthétique et d'ergonomie notamment. Elle peut être, par exemple et de manière non limitative, de forme sphérique ou hémisphérique pour imiter une souris d'ordinateur ou une partie d'un tableau de commande d'une machine médicale.

Un dispositif selon l'invention peut être intégré selon une grande variété de configurations, par exemple à un accoudoir de fauteuil pour personnes handicapées, ou au tableau de bord d'un véhicule. Il permet en particulier de remplacer des boutons électromécaniques de commande, pour des raisons de fiabilité par exemple.

Sans perte de généralité, on peut assimiler la surface de détection à un panneau de commande. De préférence, les électrodes de mesure sont juxtaposées les unes aux autres afin d'éviter des zone mortes, dans lesquelles les objets ne sont pas détectés, sur le panneau. On peut aussi créer volontairement des zones mortes dans lesquelles l'électrode est remplacée par une garde ou une masse, ce qui permet de dévier les lignes de champ des électrodes voisines pour en réduire la portée ou les modifier.

Afin d'obtenir un bon compromis entre la résolution latérale et la portée de détection de l'objet, il est avantageux de choisir une taille d'électrodes sensiblement du même ordre de grandeur que celle de l'objet. Par exemple pour optimiser la détection d'un doigt, il est avantageux de choisir une surface d'électrode de l'ordre de 1 cm$^2$ à 2 cm$^2$.

La forme des électrodes peut être adaptée en fonction des caractéristiques de détection recherchées, et plusieurs formes d'électrodes peuvent exister dans un même dispositif. Par exemple, il est possible de disposer des électrodes de forme particulière, par exemple rectangulaire, sur les bords d'un panneau de commande pour détecter de quel côté s'approche un doigt ou une main. Cela peut permettre par exemple au dispositif de sélectionner les actions autorisées pour une personne, selon le côté par lequel elle aborde le panneau.

Un dispositif selon l'invention peut fournir comme données de sorties, de manière non limitative, soit des signaux de mesure analogiques, soit des signaux sous forme numérique, soit directement les distances séparant les électrodes de l'objet ou soit directement, par exemple, la position en trois dimensions, l'analyse des mouvements de l'objet, l'identification de l'objet ou des ordres de commande.

Pour une détection en trois dimensions, chaque électrode du dispositif peut être considérée comme un pixel et la résolution spatiale physique est limitée par la surface des électrodes. Cette résolution spatiale peut être sensiblement améliorée au moyen de méthodes de calcul numérique d'interpolation. Une méthode consiste par exemple à calculer le centre de gravité de l'objet « vu » par l'ensemble des électrodes. Ce centre théorique devient un point virtuel qui peut être visualisé sur un écran. Cela permet par exemple d'écrire, de dessiner ou d'agir avec précision sur une surface réduite représentée sur un écran avec un objet tel qu'un doigt ou une main.

La détection tridimensionnelle permet aussi d'utiliser le dispositif comme une camera capacitive. En effet le système permet de mesurer en temps réel la distance absolue séparant chaque électrode de l'objet visé et, avec un nombre suffisant d'électrodes, il est possible d'imager ou de reconnaître cet objet.

Le dispositif selon l'invention a également pour objet de détecter le contact de l'objet (ou le doigt) avec la surface de détection (ou le panneau de commande) de manière suffisamment certaine pour garantir la sûreté de fonctionnement recherchée. Pour cela, connaissant la position de la surface de détection par exemple par calibrage, il est possible de déterminer le contact directement à partir de la mesure de distance de l'objet, lorsqu'on détecte que l'objet est à une distance correspondant à celle de la surface.

Suivant un mode de réalisation avantageux selon lequel la surface de détection est constituée par un matériau diélectrique en contact avec la surface des électrodes, il est possible de détecter le contact de manière plus sûre à partir de l'analyse de la capacité entre l'objet et l'électrode. En effet, lorsqu'un doigt par exemple entre en contact avec la surface du diélectrique, il n'y a pratiquement plus d'air sur le trajet des lignes de champ électrique entre le doigt et l'électrode. Or le matériau diélectrique a une permittivité diélectrique supérieure à celle de l'air, de l'ordre par exemple de $\varepsilon_r$ = 3. En conséquence, la capacité entre le doigt et l'électrode est sensiblement plus élevée lorsque le doigt est en contact avec la surface, comparé au cas où il subsiste une mince lame d'air, ce qui permet de détecter le contact de manière plus sûre.

Il est également possible, dans un dispositif selon l'invention, que les électrodes ne soient pas recouvertes de matériau diélectrique. Dans ce cas, le contact entre l'objet et une électrode peut être détecté du fait que l'électrode est mise au potentiel électrique de masse de l'objet lors du contact.

La pression peut avantageusement être mesurée en mesurant l'enfoncement d'un objet tel qu'un doigt dans un matériau diélectrique sensiblement souple ou mou recouvrant les électrodes. La distance mesurée est sensiblement proportionnelle à l'enfoncement du doigt dans le matériau diélectrique. De plus, la variation de distance mesurée, qui est également sensiblement proportionnelle à l'inverse de la capacité, est multipliée par la permittivité relative du diélectrique $\varepsilon_r$ qui recouvre l'électrode, ce qui a pour résultat une augmentation de la sensibilité de la mesure de distance dès lors qu'il y a un contact entre le doigt ou l'objet et le diélectrique.

Une autre solution pour mesurer la pression peut consister à mesurer l'augmentation de la capacité due à l'augmentation de la surface d'appui d'un objet tel qu'un doigt en contact avec la surface d'un matériau diélectrique relativement rigide, lorsque la pression exercée augmente.

La présente invention permet donc de détecter, sans contact et à plusieurs centimètres voire décimètres, la position d'un doigt ou d'un objet dans l'espace, de détecter le contact du doigt ou de l'objet sur une surface de détection telle qu'un panneau de commande ou un clavier par exemple, et aussi de détecter la pression exercée par le doigt ou l'objet sur cette surface. La mesure peut être effectuée au travers d'un matériau diélectrique quelconque. Ces caractéristiques permettent de créer des interfaces de contrôle très évoluées, esthétiques et ergonomiques avec des possibilités de combinaison de commandes originales.

Il est par exemple possible, de manière non limitative, de reconnaître des signes par le mouvement des doigts, de déterminer le côté de la surface active par laquelle une main est arrivée dans le but de contrôler des actions autorisées ou non par les différentes personnes se trouvant, devant l'interface et de valider une commande majeure par un effleurement ou une pression du doigt sur le clavier.

L'utilisation d'un dispositif selon l'invention n'est bien entendu pas limitée à la détection d'un seul doigt, et des commandes issues des mouvements simultanés ou non de plusieurs doigts peuvent être envisagés.

Un dispositif selon l'invention permet de détecter la position d'un doigt au travers de tout type de diélectrique, même épais de plusieurs millimètres voire centimètres. Cet avantage permet de concevoir des dispositifs de commande avec une infinité de forme, de relief, de couleurs et de sensation de toucher permettant de les rendre plus agréables à utiliser. On peut par exemple mettre en œuvre des matériaux de qualité comme le bois, le cuir, la céramique ou tout type de polymère rigide ou souple comme du silicone. En particulier, un matériau mou comme du silicone peut donner une sensation de toucher plus agréable.

Avantageusement, le diélectrique peut être aisément remplacé pour des raisons d'hygiène ou d'esthétique notamment. Ce diélectrique peut être un matériau apte à être lavé ou stérilisé, ce qui rend le dispositif selon l'invention particulièrement adapté à la réalisation d'interfaces dans des environnements où l'hygiène est importante.

L'invention peut porter également, de manière non limitative, sur :

- un équipement de commande assurant une fonction d'interface homme-machine intégrant un dispositif capacitif de détection de mouvement selon l'invention,
- un équipement de commande destiné à être intégré à un véhicule, comprenant un dispositif capacitif de détection de mouvement selon l'invention,
- une structure murale sensible intégrant un dispositif de contrôle selon l'invention.

Suivant un autre aspect, il est proposé un procédé d'interface de commande sensible à un mouvement d'un corps ou d'un objet, mettant en oeuvre un dispositif selon l'invention, comprenant:

- une excitation d'une ou plusieurs électrodes de mesure au sein d'au moins un capteur capacitif, lesdites électrodes de mesure comportant une surface active orientée vers une surface de détection, ou sensiblement confondue avec ladite surface de détection

- un traitement de signaux issus desdits capteurs capacitifs de façon à fournir une information de distance entre la surface active des électrodes et ledit objet, caractérisé en ce que: lesdites électrodes de mesure étant pourvues d'une garde en matériau conducteur à l'électricité disposée à proximité des électrodes de mesure au moins selon leur face sensiblement opposée à la surface active, une excitation de ladite garde étant à un potentiel électrique alternatif sensiblement identique à celui des électrodes de mesure, les électrodes de mesure présentent des surfaces actives indépendantes et sont interrogées indépendamment les unes des autres.

Dans une forme particulière de mise en oeuvre, le procédé selon l'invention qui comprend une mesure d'au moins une distance entre l'objet et la surface de détection, et un traitement desdites mesures de distance pour fournir une information d'approche, est caractérisé en ce qu'il comprend en outre:

- une mesure du contact entre l'objet et la surface de détection, et
- un traitement desdites mesures de contact pour fournir une information de toucher. Le contact peut bien entendu être un effleurement de la surface. Suivant des aspects avantageux,
- la détection du contact entre l'objet et la surface de détection peut comprendre une comparaison de capacités mesurées avec au moins une valeur de seuil,
- le traitement des mesures de distances peut comprendre une détection de la position de l'objet dans l'espace obtenue au moins à partir des mesures de distances et de connaissances sur la disposition des capteurs capacitifs, et
- le traitement des mesures de contact peut comprendre une identification des capteurs capacitifs ayant détecté un contact entre l'objet et la surface de détection.

Le procédé selon l'invention peut comprendre en outre :

- une mesure de déplacement de la surface de détection sous l'action de l'objet,
- un traitement desdites mesures de déplacement pour fournir une information d'appui.

Avantageusement,

- le procédé selon l'invention peut comprendre en outre une étape de détermination de commandes, lesquelles commandes étant conditionnées au moins par au moins l'une quelconque des informations d'approche, de toucher et d'appui,

- au moins une commande déterminée par l'une quelconque des informations de toucher et d'appui peut être conditionnée par l'information d'approche,
- au moins une commande peut être conditionnées par l'évolution temporelle d'au moins l'une quelconque des informations d'approche, de toucher et d'appui.

Ainsi, le procédé selon l'invention permet de générer des commandes en prenant en compte jusqu'à trois niveaux d'information :

- des informations d'approche,
- des informations de toucher,
- des informations d'appui.

Bien entendu, les trois niveaux d'informations peuvent apparaître et être traitées simultanément, et ces informations peuvent inclure l'évolution temporelle des mesures ou leur historique.

De manière non limitative,

- les informations d'approche peuvent par exemple comprendre la distance, la trajectoire, l'identification d'un ou plusieurs objets à partir de leur forme. Elles peuvent être utilisées par exemple pour adapter l'interface au mode d'action en cours : activation, éclairage sélectif, adaptation de l'interface à une utilisation par un gaucher ou un droitier, par une main ou un stylet, ...
- les informations de toucher peuvent comprendre par exemple le lieu de contact, des trajectoires simples ou simultanées sur la surface, des tapotements simples ou répétés. Elles peuvent par exemple être utilisées pour valider des commandes (boutons), entrer des données (écriture), faire défiler ou zoomer un affichage, ...
- les informations d'appui peuvent comprendre par exemple une pression en un lieu, le long d'une ou plusieurs trajectoires, des tapotements appuyés simples ou répétés, ainsi que la durée de la pression. Elles peuvent par exemple être utilisées pour effectuer des commandes proportionnelles (réglage d'une vitesse, d'une intensité), verrouiller des commandes, ...

La capacité à distinguer de manière sûre l'approche et le toucher (ou l'effleurement) est fondamentale pour des interfaces destinées à des applications requérant un certain niveau de sécurité. Cela permet de répondre à une exigence de sécurité fondamentale qui pose qu'un ordre doit être sélectionné puis validé afin d'éviter les actions intempestives.

Avantageusement, avec le procédé et le dispositif selon l'invention, la sélection peut se faire sans contact ce qui permet un gain de souplesse considérable. La détection et l'analyse de l'approche peuvent également être utilisées pour conférer au dispositif une capacité d'anticipation ou de préparation de commandes qui peut également être un facteur de sécurité.

On trouve ces exigences de sécurités notamment pour des interfaces destinées à des équipements médicaux ou à des véhicules, en particulier automobiles, pour lesquels le dispositif et le procédé selon l'invention sont particulièrement bien adaptés.

Bien entendu, le dispositif et le procédé selon l'invention ne sont pas limités à des applications liées à la sécurité. De manière générale, on peut citer à titre d'exemple non limitatifs les possibilités d'applications suivantes :

- Les applications étendues de commandes tridimensionnelles en général, de contrôle ou de commande gestuelle, connues par exemple sous des noms tels que « 3D touch panel », « 3D gesture controllers », « 3D floating vision » ;
- La domotique, avec par exemple des commandes de lumière, de climatisation, de volets, d'ouverture de porte ...
- L'électroménager, pour toute sorte de commande et de programmation d'appareils tels que des machines à laver, ...
- Les interfaces utilisateur d'équipements portables, téléphones, GPS, ...
- Les interfaces utilisateur d'équipements de bureautique et d'informatique, ordinateurs, ...
- Les interfaces de jeux électroniques à commande gestuelle ;
- Les interfaces de pilotage et de contrôle de fonctions de véhicules en général, y compris dans le domaine militaire et l'aviation ;

Suivant encore un autre aspect, un dispositif selon l'invention peut être associé avec d'autres moyens de détection et/ou d'identification sans contact pour réaliser des interfaces gestuelles globales comprenant plusieurs niveaux de détection d'un utilisateur. Il est possible par exemple :

- de localiser un utilisateur, par exemple dans un habitacle de véhicule, au moyen de capteurs capacitifs à plus grande distance de mesure, ou optiques ou à ultrasons, de telle sorte à préconfigurer une interface gestuelle selon l'invention. Par exemple, certaines fonctions peuvent être configurées différemment selon la position et le nombre d'occupants ;
- d'identifier, par exemple avec une caméra et des moyens de reconnaissances d'images, des mouvements et/ou des caractéristiques d'un utilisateur (genre, habillement, identité, morphologie ou toutes autres caractéristiques ...) de telle sorte à adapter l'interface gestuelle à ses besoins ou, pour des applications de contrôle d'accès, à son niveau d'autorisation.

Ainsi, il est proposé une interface gestuelle multi-échelles intégrant un dispositif de contrôle selon l'invention, caractérisé en ce qu'elle comprend en outre des moyens d'imagerie optique comme par exemple une camera 3D.

Avantageusement, ces moyens d'imagerie optique peuvent comprendre une caméra optique.

Il est également proposé un procédé selon l'invention mettant en œuvre une interface gestuelle multi-échelles, caractérisé en ce qu'il comprend en outre :

- une étape de détection de l'objet par imagerie optique, fournissant une information d'image, et
- une étape de traitement de cette information d'image pour déterminer une ou plusieurs commandes.

Suivant un autre aspect, un dispositif selon l'invention peut avantageusement être associé à une interface vocale. Ainsi, il est proposé une interface gestuelle et vocale intégrant un dispositif de contrôle selon l'invention, caractérisé en ce qu'elle comprend des moyens de reconnaissance de commandes effectuées par la voix.

Il est également proposé un procédé selon l'invention mettant en œuvre une interface vocale, caractérisé en ce qu'il comprend en outre :

- Une étape de reconnaissance vocale, et
- Une étape de traitement de cette information vocale pour déterminer une ou plusieurs commandes.

Suivant encore un autre aspect, un dispositif selon l'invention peut avantageusement être associé à un interface gestuelle multi échelles incluant des moyens d'imagerie optique et des moyens de reconnaissance vocale pour réaliser une interface virtuelle globale comprenant ainsi plusieurs technologies. Il est alors possible par exemple d'exécuter des commandes de façons gestuelles multi-échelles et vocales.

Ainsi, il est proposé une interface gestuelle multi-échelles capacitive, optique et vocale intégrant un dispositif de contrôle selon l'invention, caractérisé en ce qu'elle comprend des moyens de reconnaissances gestuelles optiques et des moyens de commandes effectuées par la voix.

Il est également proposé un procédé selon l'invention mettant en œuvre une interface vocale, caractérisé en ce qu'il comprend en outre :

- une étape de détection de l'objet par imagerie optique, fournissant une information d'image, et
- une étape de traitement de cette information d'image pour déterminer une ou plusieurs commandes,
- une étape de reconnaissance vocale, et
- une étape de traitement de cette information vocale pour déterminer une ou plusieurs commandes.

**Description des figures et modes de réalisation**

D'autres avantages et particularités de l'invention apparaîtront à la lecture de la description détaillée de mises en œuvre et de modes de réalisation nullement limitatifs, et des dessins annexés suivants :

- la figure 1 illustre un schéma général de dispositif selon l'invention,
- la figure 2 illustre des modes d'interaction avec le dispositif selon l'invention,
- la figure 3 un mode de détection du contact entre un objet et le dispositif selon l'invention,
- la figure 4 illustre un exemple de regroupement des électrodes de mesures pour augmenter la portée du dispositif,
- la figure 5 illustre un exemple de mode de réalisation d'un dispositif selon l'invention,
- la figure 6 illustre un autre exemple de mode de réalisation d'un dispositif selon l'invention, ainsi que des exemples de modes d'interaction,
- la figure 7 illustre un premier mode de réalisation des moyens électroniques d'excitation et de traitement,
- la figure 8 illustre un second mode de réalisation des moyens électroniques d'excitation et de traitement.

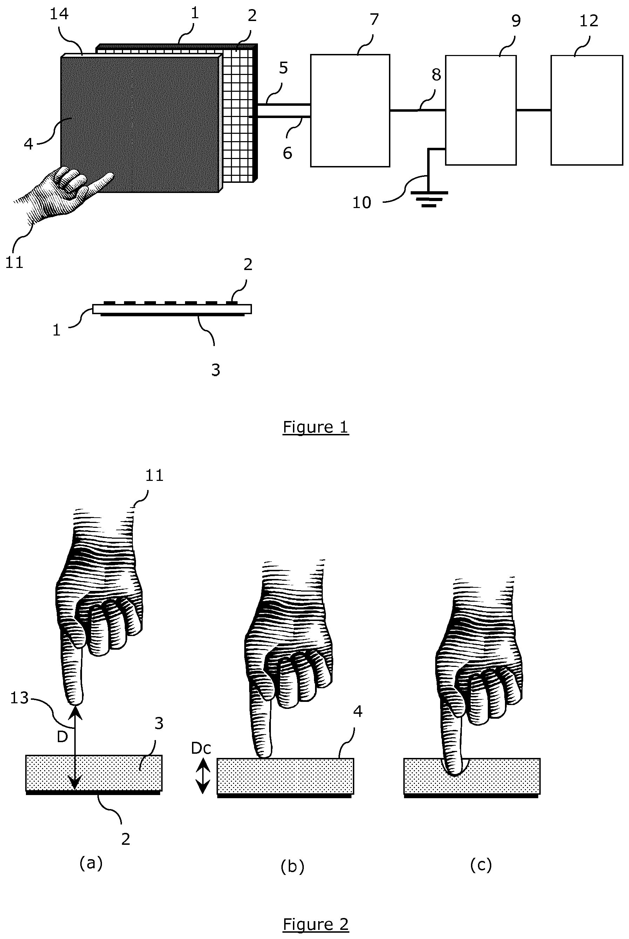

En référence à la figure 1, le dispositif selon l'invention comprend un ensemble de capteurs capacitifs réalisés sur un circuit imprimé souple double face 1. Les électrodes de mesures 2 sont gravées sur une des faces du circuit imprimé 1, tandis que la deuxième face du circuit supporte la garde 3.

Chaque électrode 2 est reliée par une piste de liaison 6 à l'électronique d'excitation et de mesure 7. Les pistes de liaisons 6 sont gravées sur la même face du circuit imprimé 1 que les électrodes. La garde 3 est également reliée à l'électronique 7, qui est flottante et référencée au potentiel de cette garde, par une liaison électrique 5. Suivant la configuration du dispositif, les liaisons électriques 5 et 6 peuvent comprendre des câbles coaxiaux.

Une plaque de matériau diélectrique 14, en silicone par exemple, est placée devant les électrodes 2, de telle sorte à être en contact avec leur surface active.

En référence à la figure 2, lorsqu'un objet 11 tel qu'une main ou un doigt s'approche du dispositif, il se crée un couplage électrique avec les électrodes capacitives 2. Les électrodes 2 en leur électronique associée 7, 9 mesurent la capacité C qui s'établit entre elles et cet objet 11, de telle sorte à en déduire la distance 13 par la relation :

$$C = \varepsilon_0 \cdot \varepsilon_r \cdot S / D,$$

où $\varepsilon_0$ est la permittivité du vide, $\varepsilon_r$ est la permittivité relative du matériau diélectrique 14 ou de l'air, qui sont à prendre en compte sur la distance où ils sont présents, S est la surface de l'électrode, de l'ordre par exemple de 1 à 2 cm$^2$ pour détecter un doigt dans de bonnes conditions, et D est la distance à mesurer.

La mesure de la distance D ou de la capacité C permet de déterminer :

- la distance de l'objet 11 lorsqu'il s'approche (figure 2a),
- le contact physique entre l'objet 11 et la surface de détection 4, qui correspond au cas où la distance D est sensiblement égale à l'épaisseur Dc du matériau diélectrique, de caractéristiques connues (figure 2b),
- et, le cas échéant, l'enfoncement de l'objet 11 dans le matériau diélectrique 14, qui correspond au cas où la distance D est sensiblement inférieure à l'épaisseur Dc, (figure 2c), et qui peut être traduit en termes de pression ou de force.

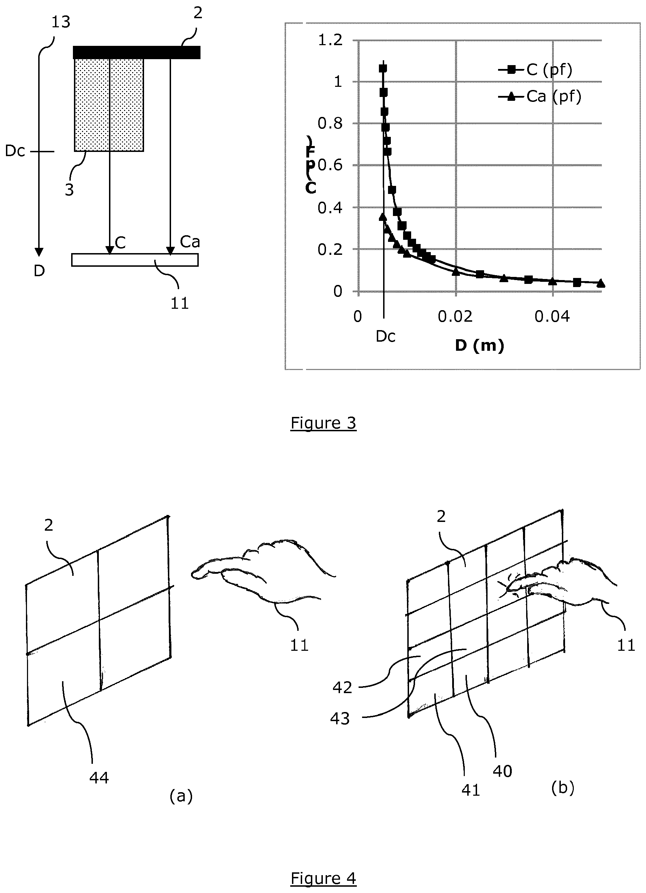

La détection du contact physique est d'un intérêt particulier pour la sûreté d'actionnement d'une commande par exemple. Cette détection est sensiblement améliorée par la présence du matériau diélectrique. La figure 3 présente un graphique comparant l'évolution de la capacité mesurée par une électrode 2 avec une surface de 2 cm$^2$, en fonction de la distance D jusqu'à un objet 11, en présence d'un matériau diélectrique 14 de permittivité relative $\varepsilon_r$ = 3 et d'épaisseur Dc = 5 mm (courbe C) et en l'absence de ce matériau, respectivement (courbe Ca). On constate qu'en présence du matériau 14 (courbe C), la capacité mesurée augmente fortement lorsque l'objet 11 est à proximité immédiate de la surface du matériau.

Le contact peut ainsi être détecté avec une sensibilité d'autant plus grande que le matériau 14 a une permittivité relative élevée. Cette détection peut être avantageusement effectuée en comparant la capacité mesurée avec une ou plusieurs valeurs de seuil.

De la même manière, lorsque l'objet s'enfonce dans un matériau diélectrique souple 14 (figure 2c), sa position peut être mesurée avec une sensibilité d'autant plus grande que la permittivité relative du matériau est élevée. Cela permet avantageusement de faire des mesures de pression précises en mesurant des déplacements relativement faibles.

Une caractéristique essentielle du dispositif selon l'invention est de permettre des mesures de grande précision, aussi bien à plusieurs centimètres voire décimètres qu'à proximité immédiate des électrodes. Ce résultat est atteint grâce à la mise en œuvre d'un procédé électronique qui permet d'atteindre à la fois une grande sensibilité et une très bonne immunité aux perturbations électromagnétiques de l'environnement. La question de l'immunité aux perturbations est d'ailleurs extrêmement importante dans un environnement de dispositifs de commandes numériques.

L'électronique mise en œuvre dans la présente invention est basée sur le procédé de mesure à pont flottant décrite dans le document FR 2,756,048.

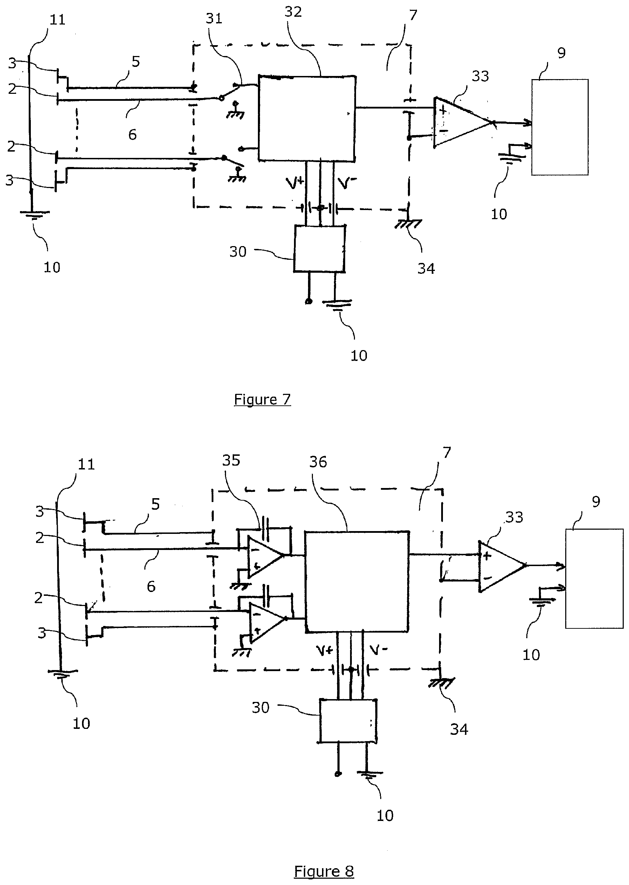

La figure 7 présente un premier exemple de mode de réalisation de l'électronique. La capacité de l'électrode 2 est mesurée par un capacimètre 7 référencé au potentiel 34 de garde 3, de manière totalement flottante par rapport à la masse générale 10. La garde 3 et les électrodes 2 sont excitées à une tension alternative à fréquence fixe au moyen du circuit 7, de telle sorte à permettre une démodulation synchrone des mesures. L'électronique flottante 7 est alimentée par exemple par un convertisseur de tensions continues DC/DC 30. Le signal de mesure après démodulation est transféré au circuit 9 référencé à la masse générale par un amplificateur différentiel 33 pour pouvoir être transmis aux moyens de calcul. Un multiplexeur 31 permet d'interroger séquentiellement les électrodes 2, tandis que les électrodes inactives sont maintenues au potentiel de garde 34.

La figure 8 présente un second exemple de mode de réalisation de l'électronique. Il diffère de celui de la figure 7 en ce que toutes les électrodes 2 ont leur propre électronique de détection 35 et peuvent être lues simultanément.

Suivent des modes de réalisation particuliers,

- le convertisseur DC/DC 30 peut être remplacé par une alimentation moins onéreuse référencée à la masse générale 10, et couplée au circuit flottant 7 par des « selfs de choc » ou bobines d'arrêt,
- l'amplificateur différentiel de sortie 33 peut être remplacé par des optocoupleurs ou des selfs de choc.

L'électronique mise en œuvre permet de mesurer des capacités de l'ordre de 0.001 pF (picofarads) jusqu'à quelques picofarads, avec une précision de l'ordre de 0.001 pF.

En prenant l'exemple de la mesure de position d'un doigt placé à 50 mm d'une électrode de surface d'environ 2 cm$^2$, on peut estimer que la capacité mesurée est d'environ 0.035 pF. Dans ces condition et à cette distance la sensibilité de l'électronique est de 0.7 pF/m et la précision de la mesure de position est inférieure à $10^{-3}$ / 0,7 = 1,4 mm.

Lorsque le doigt s'éloigne encore plus, la sensibilité décroit rapidement car les lignes de champs commencent à s'évaser sur les côtes. En effet, la garde entourant l'électrode sélectionnée représente au maximum la totalité de la surface de détection 4. Pour un panneau de dimension classique (100 à 200 mm de côté), les lignes de champ d'une électrode de 2 cm$^2$ s'évasent au-delà d'une distance d'environ 50 mm. Avec un panneau de surface plus importante, on peut même en théorie détecter un doigt à plus de 100 mm mais la résolution latérale sera considérablement dégradée.

Une main peut être très facilement détectée à plus de 300 mm si on regroupe les électrodes pour obtenir par exemple une surface d'électrode de 2500 mm$^2$. A cette distance, la capacité mesurée est d'environ 0.073 pF.

Ces performances peuvent être atteintes en utilisant la technique du pont flottant car l'électronique ne mesure que la capacité entre l'électrode 2 et l'objet 11. Dans les dispositifs de l'art antérieur tels que dans US 6,847,354, les capacités parasites générées par le circuit de mesure et de création de la garde restent supérieures à 1 pF et la stabilité de ce décalage parasite, source de bruit, est de l'ordre de quelques dizaines à quelques centaines de femtofarads.

La technique du pont flottant mise en œuvre en utilisant une excitation d'un signal alternatif avec modulation et démodulation d'amplitude permet aussi de garantir une très bonne réjection de la variation des impédances des matériaux diélectriques 14 entourant et recouvrant les électrodes 2.

De plus, le pont flottant a la particularité de mesurer directement l'inverse de la capacité entre l'électrode 2 et l'objet 11, ce qui permet d'obtenir un signal linéairement proportionnel avec la distance à mesurer 13. Cet avantage est fondamental car, à grande distance, la capacité varie très peu avec la distance (selon une loi hyperbolique), et les décalages naturels de l'électronique et des moyens de numérisation du signal dérivent plus que la capacité à mesurer.

En référence à la figure 4, les électrodes capacitives peuvent être regroupées électroniquement, par exemple au moyen du multiplexeur 31, de telle sorte à constituer des électrodes de surface supérieures capables de détecter des objets à plus grande distance. Dans l'exemple de la figure 4, l'électrode 44 est constituée en regroupant les électrodes 40, 41, 42, 43. Par exemple, lorsque le dispositif ne détecte pas d'objets à proximité, il se place dans un mode de détection à grande distance (figure 4a). Lorsqu'un objet approche de l'étendue de mesure des électrodes individuelles, le dispositif commute dans le mode le plus résolu latéralement (figure 4b) pour détecter les détails des objets. Bien entendu, la reconfiguration peut être plus complexe, et dépendre localement de ce qui est détecté par les différentes zones.

Suivant des modes de réalisation particuliers, un dispositif selon l'invention peut comprendre des dispositions d'électrodes très différentes d'une matrice carrée placée sur une surface uniforme.

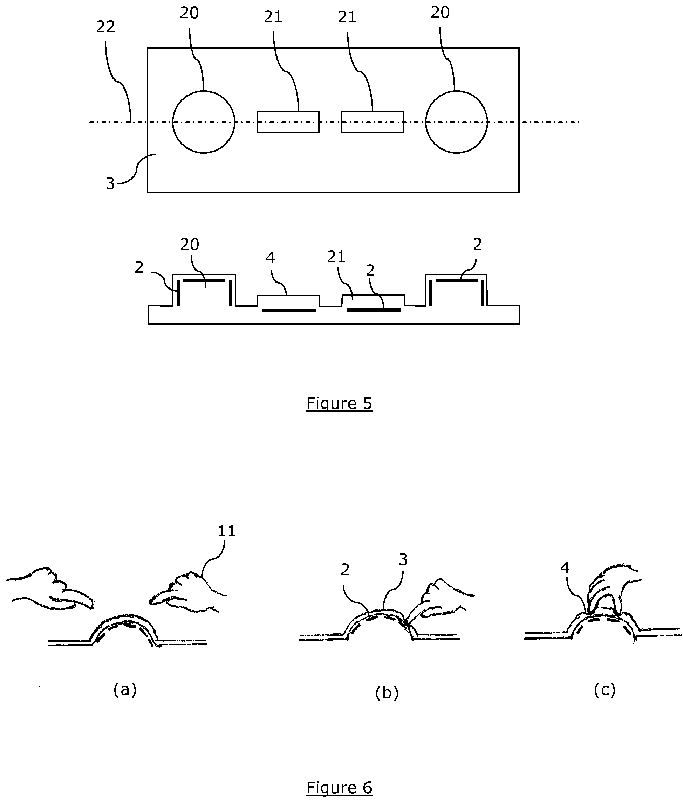

Par exemple, à la figure 5, les électrodes sont placées sous un matériau diélectrique 14 dont la surface de détection 4 imite la forme de commutateurs électromécaniques tels que des boutons tournants 20 et des boutons poussoir 21. Les « pseudo boutons » sont pourvus d'électrodes 2 permettant de détecter l'approche puis l'action d'un utilisateur.

La figure 6 illustre une interface constituée d'électrodes capacitives disposées sous une surface de détection en matériau diélectrique souple, de forme hémisphérique. Une telle interface peut par exemple aisément détecter par quel côté une main approche, s'il s'agit d'une main droite ou gauche, ou plusieurs mains (figure 6a), pour interpréter une commande effectuée avec un doigt (figure 6b) ou plusieurs doigts (figure 6c).

Suivant l'invention, les électrodes capacitives et la garde peuvent être réalisées au moyen de matériaux conducteurs transparents tel que de l'ITO (oxyde d'indium dopé à l'étain), de telle sorte que le dispositif soit sensiblement transparent et puisse être placé sur un écran de visualisation par exemple.

Bien sûr, l'invention n'est pas limitée aux exemples qui viennent d'être décrits et de nombreux aménagements peuvent être apportés à ces exemples sans sortir du cadre de l'invention.

**Revendications**

1.  Dispositif d'interface de commande sensible à un mouvement d'un corps ou d'un objet, comprenant :

    - une surface de détection (4),
    - au moins un capteur capacitif, lequel ou lesquels capteur(s) comprend chacun une électrode de mesure (2) comportant une surface active orientée vers la surface de détection (4), ou sensiblement confondue avec ladite surface de détection,
    - des moyens électroniques d'excitation et de traitement (7, 9, 12) pour exciter les électrodes de mesure (2) à un potentiel électrique alternatif et traiter les signaux issus desdites électrodes de mesure (2), de façon à mesurer la capacité entre lesdites électrodes de mesure (2) et un objet (11) et fournir une information de distance (13) entre la surface active desdites électrodes de mesure (2) et ledit un objet (11), dans lequel :
    - les électrodes de mesure (2) sont réalisées au moyen de matériaux conducteurs sensiblement transparents, et
    - le dispositif d'interface de commande est sensiblement transparent,

    et **caractérisé par** :

    - une garde (3) en matériau conducteur à l'électricité disposée à proximité des électrodes de mesure (2) au moins selon leur face sensiblement opposée à la surface active, laquelle garde (3) est excitée à un potentiel électrique alternatif sensiblement identique à celui des électrodes de mesure (2), et
    - dans laquelle la garde (3) est réalisée au moyen de matériaux conducteurs sensiblement transparents.

2.  Dispositif selon la revendication 1, dans lequel il est apte à être placé sur un écran de visualisation.

3.  Dispositif selon l'une des revendications 1 ou 2, dans lequel les électrodes de mesure (2) et la garde (3) sont réalisées au moyen d'ITO (oxyde d'indium dopé à l'étain).

**4.** Dispositif selon l'une des revendications précédentes, dans lequel :

- les surfaces actives des électrodes de mesure (2) sont indépendantes les unes des autres, et
- les moyens électroniques d'excitation et de traitement (7, 9, 12) sont en outre agencés pour interroger lesdites électrodes de mesure indépendamment les unes des autres.

**5.** Dispositif selon l'une quelconque des revendications précédentes, dans lequel les moyens électroniques d'excitation et de traitement (7, 9, 12) présentent une étendue de mesure permettant à la fois :

- de détecter et identifier un mouvement relatif du corps ou de l'objet (11) par rapport à la surface active des électrodes de mesure (2), et
- de détecter de manière certaine un contact dudit corps ou dudit objet avec la surface de détection (4).

**6.** Dispositif selon l'une quelconque des revendications précédentes, dans lequel les moyens électroniques d'excitation et de traitement sont au moins pour partie (7) référencés au potentiel électrique de la garde.

**7.** Dispositif selon l'une quelconque des revendications précédentes, dans lequel les moyens électroniques d'excitation et de traitement (7, 9) comprennent des moyens de scrutation (31) permettant de lire séquentiellement les signaux de mesure issus des capteurs capacitifs, les électrodes qui ne sont pas en cours de scrutation étant reliées au potentiel de la garde (3).

**8.** Dispositif selon l'une quelconque des revendications précédentes, dans lequel les moyens électroniques d'excitation et de traitement comprennent des moyens permettant de regrouper électriquement des électrodes de mesure (40, 41, 42, 43), de telle sorte que lesdites électrodes regroupées constituent une électrode de mesure unique (44).

**9.** Equipement de commande assurant une fonction d'interface homme-machine intégrant un dispositif d'interface de commande selon l'une des revendications précédentes et un écran de visualisation.

**10.** Interface gestuelle multi-échelles intégrant un dispositif d'interface de commande selon l'une quelconque des revendications 1 à 8, dans laquelle elle comprend en outre au moins l'un des moyens suivants :

- des moyens d'imagerie optique,
- des moyens de reconnaissance vocale.

**11.** Procédé d'interface de commande sensible à un mouvement d'un corps ou d'un objet, comprenant :

- une excitation d'une ou plusieurs électrodes de mesure (2) au sein d'au moins un capteur capacitif à un potentiel électrique alternatif, lesdites électrodes de mesure comportant une surface active orientée vers une surface de détection (4), ou sensiblement confondue avec ladite surface de détection
- un traitement de signaux issus desdites électrodes de mesure (2) de façon à mesurer la capacité entre lesdites électrodes de mesure (2) et un objet (11) et fournir une information de distance (13) entre la surface active desdites électrodes de mesure (2) et ledit un objet (11),

**caractérisé en ce que**:
lesdites électrodes de mesure étant pourvues d'une garde (3) en matériau conducteur à l'électricité disposée à proximité des électrodes de mesure (2) au moins selon leur face sensiblement opposée à la surface active,

- une excitation de ladite garde (3) à un potentiel électrique alternatif sensiblement identique à celui des électrodes de mesure (2),

le dit procédé est mis en œuvre dans un dispositif d'interface de commande sensiblement transparent placé sur un écran de visualisation et pourvu d'électrodes de mesure (2) et de la garde (3) réalisées au moyen de matériaux conducteurs sensiblement transparents.

**12.** Procédé selon la revendication 11, dans lequel il comprend une étape d'affichage sur l'écran de visualisation de l'interface d'un logiciel, dont l'image évolue en réponse aux actions du ou des objets (11).

**13.** Procédé selon l'une quelconque des revendications 11 ou 12, comprenant une mesure d'au moins une distance (13) entre un objet (11) et une surface de détection (4),

- un traitement desdites mesures de distance pour fournir une information d'approche,

dans lequel il comprend en outre :

- une mesure du contact entre l'objet (11) et la surface de détection (4), et
- un traitement desdites mesures de contact pour fournir une information de toucher.

**14.** Procédé selon la revendication 13, dans lequel :

- le traitement des mesures de distances comprend une détection de la position de l'objet (11) dans l'espace obtenue au moins à partir de mesures de distances et de connaissances sur la disposition des capteurs capacitifs (2), et que
- le traitement des mesures de contact comprend une identification des capteurs capacitifs (2) ayant détecté un contact entre l'objet (11) et la surface de détection (4).

**15.** Procédé selon l'une quelconque des revendications 13 ou 14, dans lequel il comprend en outre une étape de détermination de commandes, lesquelles commandes sont conditionnées au moins par au moins l'une quelconque des informations d'approche et de toucher.

**16.** Procédé selon la revendication 15, dans lequel au moins une commande déterminée par une information de toucher est conditionnée par une information d'approche.

**17.** Procédé selon l'une quelconque des revendications 15 ou 16, dans lequel au moins une commande est conditionnée par l'évolution temporelle d'au moins l'une quelconque des informations d'approche ou de toucher.

**18.** Procédé selon l'une quelconque des revendications 11 à 17, mettant en œuvre une interface gestuelle selon la revendication 10, dans lequel il comprend en outre au moins l'une des séquences d'étapes suivantes :

- une étape de détection de l'objet par imagerie optique, fournissant une information d'image, et un traitement de ces informations d'image pour déterminer une ou plusieurs commandes,
- une étape de reconnaissance vocale, et un traitement de cette information vocale pour déterminer une ou plusieurs commandes.

**Patentansprüche**

**1.** Steuerschnittstelleneinrichtung, die auf eine Bewegung eines Körpers oder eines Objekts reagiert, umfassend:

- eine Erfassungsfläche (4),
- mindestens einen kapazitiven Sensor, wobei jeder der Sensoren eine Messelektrode (2) umfasst, deren aktive Oberfläche zur Erfassungsfläche (4) ausgerichtet ist oder im Wesentlichen mit dieser übereinstimmt,
- elektronische Mittel zur Erregung und Verarbeitung (7, 9, 12) zum Anregen der Messelektroden (2) mit einem elektrischen Wechselpotential und zum Verarbeiten von Signalen von den Messelektroden (2), um die Kapazität zwischen den Messelektroden (2) und dem Objekt (11) zu messen und eine Entfernungsinformation (13) zwischen der aktiven Oberfläche der Messelektroden (2) und dem Objekt (11) bereitzustellen, wobei:
- die Messelektroden (2) aus im Wesentlichen transparentem leitfähigem Material bestehen und
- die Steuerschnittstelleneinrichtung im Wesentlichen transparent ist,

und **gekennzeichnet durch**:

- eine Abschirmung aus elektrisch leitfähigem Material (3), die in der Nähe der Messelektroden (2) zumindest entsprechend ihrer der aktiven Oberfläche im Wesentlichen gegenüberliegenden Seite angeordnet ist, wobei die Abschirmung (3) mit einem elektrischen Wechselpotential angeregt wird, das auf das der Messelektroden (2) bezogen ist und sich von einem Erdpotential unterscheidet, und
- wobei die Abschirmung (3) aus einem im Wesentlichen transparenten leitfähigen Material besteht.

**2.** Vorrichtung nach Anspruch 1, die so konfiguriert ist, dass sie auf einem Bildschirm platziert werden kann.

**3.** Vorrichtung nach einem der Ansprüche 1 oder 2, wobei die Messelektroden (2) und die Abschirmung (3) aus ITO (Indiumzinnoxid) hergestellt sind.

**4.** Vorrichtung nach einem der vorstehenden Ansprüche, wobei:

- die aktiven Oberflächen der Messelektroden (2) voneinander unabhängig sind und
- die elektronischen Erregungs- und Verarbeitungsmittel (7, 9, 12) ferner so angeordnet sind, dass sie die Messelektroden unabhängig voneinander abfragen.

**5.** Vorrichtung nach einem der vorstehenden Ansprüche, wobei die elektronischen Erregungs- und Verarbeitungsmittel (7, 9, 12) einen Messbereich aufweisen, der sowohl Folgendes ermöglicht:

- Erfassen und Identifizieren einer Relativbewegung des Körpers oder Objekts (11) in Bezug auf die aktive Oberfläche der Messelektroden (2) und
- das sichere Erfassen eines Kontakts des Körpers oder Objekts mit der Erfassungsfläche (4).

**6.** Vorrichtung nach einem der vorstehenden Ansprüche, bei der die elektronischen Erregungs- und Verarbeitungsmittel zumindest teilweise (7) auf das elektrische Potential der Schutzvorrichtung bezogen sind.

**7.** Vorrichtung nach einem der vorstehenden Ansprüche, wobei die elektronischen Erregungs- und Verarbeitungsmittel (7, 9) Abtastmittel (31) zum sequentiellen Auslesen der Messsignale aus den kapazitiven Sensoren umfassen, wobei die nicht abgetasteten Elektroden mit dem Potential der Schutzvorrichtung (3) verbunden sind.

**8.** Vorrichtung nach einem der vorstehenden Ansprüche, wobei die elektronischen Erregungs- und Verarbeitungsmittel Mittel zum elektrischen Gruppieren von Messelektroden (40, 41, 42, 43) umfassen, so dass die gruppierten Elektroden eine einzige Messelektrode (44) bilden.

**9.** Steuervorrichtung mit einer Mensch-Maschine-Schnittstellenfunktion, die eine Steuerschnittstelleneinrichtung gemäß einem der vorstehenden Ansprüche und einen Bildschirm umfasst.

**10.** Mehrskalige Gesten-Schnittstelle, die eine Steuerschnittstelleneinrichtung gemäß einem der Ansprüche 1 bis 8 umfasst, wobei sie ferner mindestens eine der folgenden Einrichtungen umfasst:

- optische Bildgebungsmittel,
- Mittel zur Spracherkennung.

**11.** Ein auf die Bewegung eines Körpers oder eines Objekts reagierendes Steuerungsschnittstellenverfahren, das Folgendes umfasst:

- eine Erregung einer oder mehrerer Messelektroden (2) innerhalb mindestens eines kapazitiven Sensors mit einem wechselnden elektrischen Potential, wobei die Messelektroden eine aktive Oberfläche aufweisen, die zu einer Erfassungsfläche (4) hin ausgerichtet ist oder im Wesentlichen mit dieser Erfassungsfläche übereinstimmt,
- Verarbeitung von Signalen von den Messelektroden (2), um die Kapazität zwischen den Messelektroden (2) und dem Objekt (11) zu messen und Entfernungsinformationen (13) zwischen der aktiven Oberfläche der Messelektroden (2) und dem Objekt (11) bereitzustellen,

**gekennzeichnet durch**:

- dass die Messelektroden mit einer Abschirmung aus elektrisch leitendem Material (3) versehen sind, die nahe den Messelektroden (2) zumindest entsprechend ihrer der aktiven Oberfläche im Wesentlichen gegenüberliegenden Seite angeordnet ist,
- dass die Abschirmung (3) mit einem elektrischen Wechselpotential erregt wird, das im Wesentlichen mit dem der Messelektroden (2) identisch ist,
- wobei das Verfahren in einer im Wesentlichen transparenten Steuerungsschnittstelleneinrichtung durchgeführt wird, die auf einem Bildschirm angeordnet ist und mit Messelektroden (2) und der Abschirmung (3) aus im Wesentlichen transparenten leitfähigen Materialien versehen ist.

**12.** Verfahren nach Anspruch 11, wobei es einen Schritt zum Anzeigen einer Software auf dem Schnittstellenbildschirm umfasst, deren Bild sich in Reaktion auf die Aktionen des Objekts (11) verändert.

**13.** Verfahren nach einem der Ansprüche 11 oder 12, umfassend das Messen mindestens eines Abstands (13) zwischen einem Objekt (11) und einer Erfassungsfläche (4),

- die Verarbeitung der genannten Abstandsmessungen, um Annäherungsinformationen bereitzustellen,

wobei es ferner umfasst:

- Messen des Kontakts zwischen dem Objekt (11) und der Erfassungsfläche (4) und
- Verarbeiten der Kontaktmessung, um Berührungsinformationen bereitzustellen.

**14.** Verfahren nach Anspruch 13, wobei:

- die Entfernungsmessungsverarbeitung eine Erfassung der Objektposition (11) im Raum umfasst, die zumindest aus Entfernungsmessungen und der Kenntnis der Anordnung der kapazitiven Sensoren (2) gewonnen wird, und dass
- die Kontaktmessungsverarbeitung umfasst eine Identifizierung der kapazitiven Sensoren (2), die einen Kontakt zwischen dem Objekt (11) und der Erfassungsfläche (4) erfasst haben.

**15.** Verfahren nach einem der Ansprüche 13 oder 14, wobei es ferner einen Schritt zum Bestimmen von Befehlen umfasst, wobei diese Befehle durch mindestens eine der Annäherungs- und Berührungsinformationen bedingt sind.

**16.** Verfahren nach Anspruch 15, bei dem mindestens eine durch eine Berührungsinformation bestimmte Steuerung durch eine Annäherungsinformation bedingt ist.

**17.** Verfahren nach einem der Ansprüche 15 oder 16, bei dem mindestens eine Steuerung durch die zeitliche Entwicklung mindestens einer der Annäherungs- oder Berührungsinformationen bedingt ist.

**18.** Verfahren nach einem der Ansprüche 11 bis 17, das eine gestische Schnittstelle nach Anspruch 10 implementiert, wobei es ferner mindestens einen der folgenden Schritte umfasst:

> - einen Schritt zum Erfassen des Objekts durch optische Bildgebung, zum Bereitstellen von Bildinformationen und zum Verarbeiten dieser Bildinformationen, um einen oder mehrere Befehle zu bestimmen,
> - einen Schritt zum Erkennen von Sprache und zum Verarbeiten dieser Sprachinformationen, um einen oder mehrere Befehle zu bestimmen.

**Claims**

**1.** A control interface device sensitive to a motion of a body or an object, comprising:

> - a detection surface (4),
> - at least one capacitive sensor, each of said sensor(s) comprises a measuring electrode (2) having an active surface oriented towards the detection surface (4), or substantially coincident with said detection surface,
> - electronic means of excitation and processing (7, 9, 12) for exciting the measuring electrodes (2) to an alternating electric potential and processing signals from said measuring electrodes (2), so as to measure the capacity between the measuring electrodes (2) and object (11) and to provide a distance information (13) between the active surface of the measuring electrodes (2) and the object (11), in which:
> - the measuring electrodes (2) are realized by means of substantially transparent conductive material, and
> - the control interface device is substantially transparent,

> and **characterized by**:

> - a guard of electrically conductive material (3) arranged near the measuring electrodes (2) at least according to their side substantially opposite to the active surface, said guard (3) is excited at an alternating electrical potential referenced to that of the measuring electrodes (2) and different from a ground potential, and
> - in which the guard (3) is realized by means of substantially transparent conductive material.

**2.** The device according to claim 1, in which it is configured to be placed on a display screen.

**3.** The device according to one of claims 1 or 2, in which the measuring electrodes (2) and the guard (3) are made by means of ITO (indium tin oxide).

**4.** The device according to one of the preceding claims, in which:

> - the active surfaces of the measuring electrodes (2) are independent of each other, and
> - the electronic excitation and processing means (7, 9, 12) are further arranged to interrogate said measuring electrodes independently of each other.

**5.** The device according to any of the preceding claims, in which the electronic excitation and processing means (7, 9, 12) have a measuring range allowing both:

> - detecting and identifying relative movement of the body or object (11) with respect to the active surface of the measuring electrodes (2), and
> - detecting with certainty a contact of the body or object with the detection surface (4).

**6.** The device according to any of the preceding claims, in which the electronic excitation and processing means are at least partly (7) referenced to the electrical potential of the guard.

**7.** The device according to any of the preceding claims, in which the electronic excitation and processing means (7, 9) comprise scanning means (31) for sequentially reading the measurement signals from the capacitive sensors, the electrodes which are not being scanned being connected to the potential of the guard (3).

**8.** The device according to any of the preceding claims, in which the electronic excitation and processing means comprise means for electrically grouping measuring electrodes (40, 41, 42, 43), such that said grouped electrodes constitute a single measuring electrode (44).

**9.** A control equipment providing a man-machine interface function including a control interface device according to one of the preceding claims and a display screen.

**10.** A multiscale gestural interface including a control interface device according to any of claims 1 to 8, in which it further comprises at least one of the following means:

- optical imaging means,
- means of voice recognition.

**11.** A control interface method sensitive to a motion of a body or an object, comprising:

- an excitation of one or more measuring electrodes (2) within at least one capacitive sensor at an alternating electrical potential, said measuring electrodes comprising an active surface oriented towards a detection surface (4), or substantially coincident with said detection surface,
- processing signals from said measuring electrodes (2) so as to measure the capacity between the measuring electrodes (2) and object (11) and to provide distance information (13) between the active surface of the measuring electrodes (2) and the object (11),

**characterized by**:

- said measuring electrodes being provided with a guard of electrically conductive material (3) disposed close to the measuring electrodes (2) at least according to their face substantially opposite the active surface,
- an excitation of said guard (3) at an alternating electrical potential substantially identical to that of the measuring electrodes (2),
- said method being carried out in a substantially transparent control interface device placed on a display screen and provided with measuring electrodes (2) and the guard (3) made of substantially transparent conductive materials.

**12.** The method according to claim 11, in which it comprises a displaying step on the interface display screen of a software, the image of which evolves in response to the actions of the object (11).

**13.** The method according to any of claims 11 or 12, comprising measuring at least one distance (13) between an object (11) and a detection surface (4),

- processing said distance measurements to provide approach information,

wherein it further comprises:

- measuring the contact between the object (11) and the detection surface (4), and
- processing said contact measuring to provide touch information.

**14.** The method according to claim 13, in which:

- the distance measurement processing comprises a detection of the object position (11) in space obtained at least from distance measurements and knowledge of the arrangement of the capacitive sensors (2), and that
- the contact measurement processing comprises an identification of the capacitive sensors (2) having detected a contact between the object (11) and the detection surface (4).

**15.** The method according to any of claims 13 or 14, in which it further comprises a step of determining commands, which commands are conditioned by at least any of the approach and touch information.

**16.** The method according to claim 15, in which at least one control determined by a touch information is conditioned by an approach information.

**17.** The method according to any one of claims 15 or 16, in which at least one control is conditioned by the temporal evolution of at least one of the approach or touch information.

**18.** The method according to any of claims 11 to 17, implementing a gestural interface according to claim 10, in which it further comprises at least one of the following steps:

- a step of detecting the object by optical imaging, providing image information, and processing this image information to determine one or more commands,
- a speech recognition step, and processing this speech information to determine one or more commands.

Figure 1

Figure 2

Figure 3

Figure 4

Figure 5

(a)     (b)     (c)

Figure 6

Figure 7

Figure 8

20

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6847354 B
- FR 2884349
- US 2006097991 A1
- US 2009009485 A1
- FR 2756048